# EUROPEAN PATENT APPLICATION

(11) **EP 4 592 126 A1**
(43) Date of publication of application: **30.07.2025**
(21) Application number: 25151563.1
(22) Date of filing: 13.01.2025

(54) **POWER DISTRIBUTION CONTROL**

(30) Priority: 12.01.2024 US 202463620621 P; 24.07.2024 US 202463674924 P
(71) Applicant: Zimeno, Inc. DBA Monarch Tractor, Livermore, California 94551 (US)
(72) Inventor: OMOHUNDRO, Zachary Meyer, Livermore, CA (US)
(74) Representative: Derry, Paul Stefan

(57) **Abstract**

A power distribution control system (20) may include a grid interface (32), a grid power rail (36), an electrical vehicle (EV) interface (40), an EV power rail (44) connected to the EV interface (40), a first load interface (50-1) for connection to a first external load (70-1), a second load interface (50-2), and a controller (30). The controller (30) is configured to output control signals to switches (58-1,58-2) to actuate the system (20) between a first system state in which power on the EV power rail (44) is supplied to the first load interface (50-1) and power on the grid power rail (36) is concurrently supplied to the second load interface (50-2); a second system state in which power on the EV power rail (44) is concurrently supplied to the first load interface (50-1) and the second load interface (50-2); and a third system state in which power on the grid power rail (36) is concurrently supplied to the first load interface (50-1) and the second load interface (50-2).

## Description

### CROSS-REFERENCE TO RELATED PATENT APPLICATIONS

The present application claims priority under 35 USC §119 from co-pending US Provisional Patent Application Serial No. 63/620,621 filed on January 12, 2024, by OMOHUNDRO et al. and entitled POWER DISTRIBUTION CONTROL, the full disclosure of which is hereby incorporated by reference. The present application claims priority under 35 USC §119 from co-pending US Provisional Patent Application Serial No. 66/501,376 filed on July 24, 2024, by OMOHUNDRO et al. and entitled POWER DISTRIBUTION CONTROL, the full disclosure of which is hereby incorporated by reference.

### BACKGROUND

An electrical power grid may supply power to various consumer loads. Power received from electrical power grid may be distributed by one or more circuit breaker boxes, also referred to as circuit breaker panels, load centers, service panels or electrical panels. The recent need for charging electrical vehicles has placed additional burdens on the electrical power grid.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### BRIEF DESCRIPTION OF THE DRAWINGS

Figure 1 is a diagram schematically illustrating portions of an example power distribution control system connected to an example electric vehicle.
Figure 2 is a diagram schematically illustrating an example power distribution control system having multiple subsystems connected to multiple example electrical vehicles.
Figure 3 is a diagram schematically illustrating portions of an example power distribution control system in a first state.
Figure 4 is a diagram schematically illustrating portions of an example power distribution control system in a second state.
Figure 5 is a diagram schematically illustrating portions of an example power distribution control system in a third state.
Figure 6 is a diagram schematically illustrating portions of an example power distribution control system in a fourth state.
Figure 7 is a diagram schematically illustrating portions of an example power distribution control system in a fifth state.
Figure 8 is a diagram schematically illustrating portions of an example power distribution control system in a sixth state.
Figure 9 is a diagram schematically illustrating portions of an example power distribution control system in a seventh state.
Figure 10 is a diagram schematically illustrating portions of an example power distribution control system in an eleventh state.
Figure 11 is a diagram schematically illustrating portions of an example power distribution control system in a twelfth state.
Figure 12 is a diagram schematically illustrating portions of an example power distribution control system in a thirteenth state.
Figure 13 is a diagram schematically illustrating portions of an example power distribution control system.
Figure 14 is a diagram schematically illustrated portions of an example power distribution control system connected to an example electric vehicle.
Figure 15 is a diagram schematically illustrating portions of an example power distribution control system.
Figure 16 is a diagram schematically illustrating portions of an example power distribution control system.
Figure 17 is a diagram schematically illustrated portions of the example power distribution control system of Figure 14 connected to a hybrid inverter.
Figure 18 is a diagram schematically illustrating portions of the example power distribution control system of Figure 14 connected to a standalone inverter.

Throughout the drawings, identical reference numbers designate similar, but not necessarily identical, elements. The figures are not necessarily to scale, and the size of some parts may be exaggerated to more clearly illustrate the example shown. Moreover the drawings provide examples and/or implementations consistent with the description; however, the description is not limited to the examples and/or implementations provided in the drawings.

### DETAILED DESCRIPTION OF EXAMPLES

Disclosed are example power distribution control systems and methods that provide for enhanced control over the distribution of electrical power to loads from an electrical power grid and an electrical vehicle, such as an electrical tractor. The example power distribution control systems may comprise an electrical circuit breaker boxes (also referred to as circuit breaker panels, load centers, service panels or electrical panels) that control such distribution of electrical power. The example circuit breaker boxes are actuatable to a state or configuration in which electrical power is supplied from the electrical power grid to a first load connected to the circuit breaker box and in which electrical power is concurrently supplied from an electrical vehicle to a second load, both of which are also connected to the circuit breaker box. Because the example circuit breaker boxes or systems are configured to concurrently supply electrical power from an electrical grid to first selected loads and electrical power from an electrical vehicle to second selected loads, the example systems and breaker boxes enable a consumer to precisely control what loads are receiving power from the electrical power grid and what loads are receiving power stored on the battery of an electrical vehicle to ensure the delivery of power to more essential loads, to manage energy consumption and to save money by reducing use of power from the power grid during peak times.

In some implementations, the example power distribution control systems or breaker boxes are additionally actuatable to a first example state where the electrical vehicle supplies electrical power to the electrical power grid. In some implementations, the example power distribution control systems or breaker boxes are additionally actuatable to a second state in which all loads receive electrical power from the electrical power grid or a third state in which all loads receive electrical power from the electrical vehicle.

In some implementations, the example power distribution control systems or breaker boxes are configured to manage the distribution of electrical power with respect to the electrical power grid and more than one electrical vehicle. For example, in some implementations, such breaker boxes may be concurrently connectable to two different electrical vehicles. In the illustrated examples, an individual load connected to the breaker box may receive electrical power from a first electrical vehicle, a second electrical vehicle or the electrical power grid, depending upon the state of the breaker box. The example power distribution control systems or breaker boxes may include various switches for changing the state of the breaker box. The example systems may include or communicate with a controller (part of the breaker box or external to the breaker box) which may controllably actuate the switches to change the breaker box between different states or configurations to control what particular loads receive electrical power from electrical power grid and what particular loads receive electrical power from either the first electrical vehicle or a second electrical vehicle.

The example power distribution control systems or breaker boxes may include various electrical sensors for detecting the current and/or voltage at various points within the breaker box. Based upon signals from such electrical sensors, the controller may actuate the system between various states. For example, in some implementations, in circumstances where the supply electrical power from the power grid is currently unreliable or subject to outages, the controller may actuate the switches such that the system or breaker box is in a state that electrically connects more essential loads to an electrical vehicle for the supply of electrical power and electrically connects less essential loads to the electrical power grid. In some implementations, during peak times or the cost of electrical power is higher, the controller may output control signals to actuate the switches such as the system or breaker box is in a state such that non-essential loads are disconnected from the electrical power grid and other loads, such as more essential loads are connected to an electrical vehicle for receiving power. In some implementations, during peak times, the controller may output control signals to the switches such that the various loads receive electrical power from an electrical vehicle. During off-peak times, the controller may output control signals the various loads, including the electrical vehicle itself, are charged with power from the electrical power grid.

For purposes of this disclosure, the term "processing unit" shall mean a presently developed or future developed computing hardware that executes sequences of instructions contained in a non-transitory memory. Execution of the sequences of instructions causes the processing unit to perform steps such as generating control signals. The instructions may be loaded in a random access memory (RAM) for execution by the processing unit from a read only memory (ROM), a mass storage device, or some other persistent storage. In other embodiments, hard wired circuitry may be used in place of or in combination with software instructions to implement the functions described. For example, a controller may be embodied as part of one or more application-specific integrated circuits (ASICs). Unless otherwise specifically noted, the controller is not limited to any specific combination of hardware circuitry and software, nor to any particular source for the instructions executed by the processing unit.

For purposes of this disclosure, unless otherwise explicitly set forth, the recitation of a "processor", "processing unit" and "processing resource" in the specification, independent claims or dependent claims shall mean at least one processor or at least one processing unit. The at least one processor or processing unit may comprise multiple individual processors or processing units at a single location or distributed across multiple locations.

For purposes of this disclosure, the phrase "configured to" denotes an actual state of configuration that fundamentally ties the stated function/use to the physical characteristics of the feature proceeding the phrase "configured to".

For purposes of this disclosure, unless explicitly recited to the contrary, the determination of something "based on" or "based upon" certain information or factors means that the determination is made as a result of or using at least such information or factors; it does not necessarily mean that the determination is made solely using such information or factors. For purposes of this disclosure, unless explicitly recited to the contrary, an action or response "based on" or "based upon" certain information or factors means that the action is in response to or as a result of such information or factors; it does not necessarily mean that the action results solely in response to such information or factors.

For purposes of this, unless explicitly recited to the contrary, recitations reciting that signals "indicate" a value or state means that such signals either directly indicate a value, measurement or state, or indirectly indicate a value, measurement or state. Signals that indirectly indicate a value, measure or state may serve as an input to an algorithm or calculation applied by a processing unit to output the value, measurement or state. In some circumstances, signals may indirectly indicate a value, measurement or state, wherein such signals, when serving as input along with other signals to an algorithm or calculation applied by the processing unit may result in the output or determination by the processing unit of the value, measurement or state.

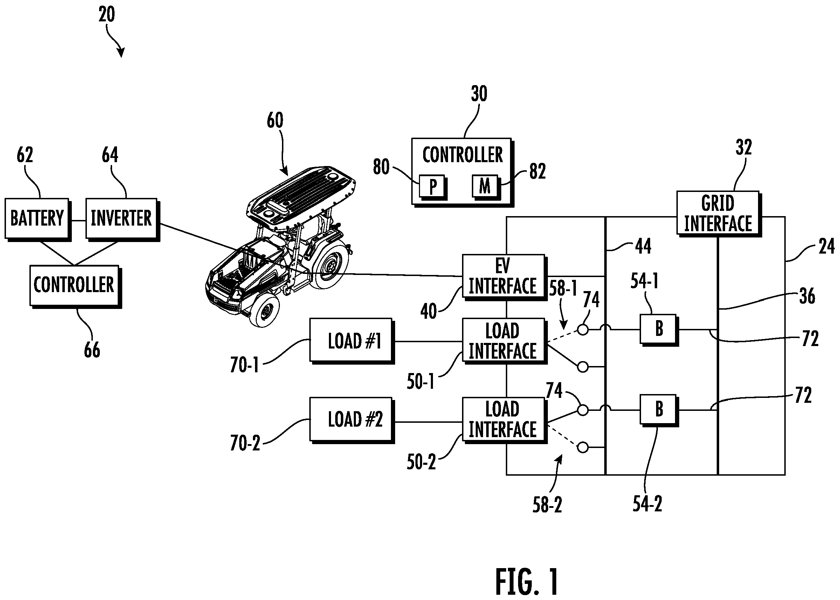

Figure 1 is a schematic diagram illustrating portions of an example power distribution control system 20. Power distribution control system 20 is configured to distribute power from a power grid to various loads and to concurrently distribute power from an electrical vehicle to various loads. Power distribution control system 20 enables a consumer to precisely control what loads are receiving power from the electrical power grid and what loads are receiving power stored on the battery of an electrical vehicle to ensure the delivery of power to more essential loads, to manage energy consumption and to save money by reducing use of power from the power grid during peak times. Power distribution control system 20 comprises breaker box 24 and controller 30.

Breaker box 24 comprises a variety of components of which include one or more printed circuit boards and electronics. Breaker box 24 may be mounted to a fixed structure, such as a building, pole or the like. Breaker box 24 may service multiple electrical power loads. In the example illustrated, breaker box 24 comprises grid interface 32, grid power rail 36, electrical vehicle (EV) interface 40, EV power rail 44, load interfaces 50-1, 50-2 (collectively referred to as load interfaces 50), breakers 54-1, 54-2 (collectively referred to as breakers 54) and switches 58-1, 58-2 (collectively referred to as switches 58).

Grid interface 32 comprises an electrical connection or components for interfacing and electrically connecting to an external power grid. Grid interface 32 may comprise an electrical wire cabling secured to electrical terminals, may comprise a plug or other electrical connection components. Grid interface 32 delivers electrical power from the external power grid to grid power rail 36. Grid power rail 36, sometimes referred to as a grid bus, electrically conducts electrical power for being distributed. Such electrical power is in the form of an alternating current. Such electrical power may be single phase, split-phase, or three-phase. Examples of three-phase configurations include, but are not limited to, wye or a delta configurations. For ease of illustration, single lines are used to schematically represent the various configurations as individual "power rails".

EV interface 40 comprises an electrical component configured for releasably connecting to an electrical vehicle so as to receive electrical power from the electrical vehicle. In some implementations, EV interface 40 may comprise a SAE J3068 electric vehicle power transfer system using a three-phase capable coupler. In some implementations, EV interface 40 may comprise a SAE J1772 coupler for supporting a wide range of single phase AC charging rates.

In the example illustrated, EV interface 40 is configured for electrical connection to an electrical vehicle, such as the example electrical vehicle 60 shown as an agricultural vehicle, such as a tractor. As schematically shown by Figure 1, electrical vehicle 60 comprises an electrical battery 62, an inverter 64 and a controller 66. Electrical battery 62 stores electrical power. Inverter 64 converts electrical power between alternating current and direct current. Inverter 64 may convert direct current from battery 62 to alternating current force applied to EV interface 40. Conversely, inverter 64 may convert alternating current received from EV interface 40 to direct-current for charging battery 62. Controller 66 comprises electronics, circuitry and/or a processing unit that follows instructions contained in a non-transitory computer-readable medium, wherein controller 66 may be configured to monitor the charge state of battery 62, controller operation of inverter 64 and communicate with components of breaker box 24 and controller 30.

EV power rail 44 is electrically connected to EV interface 40. As will be described hereafter as further example implementations, in some implementations, EV power rail 44 may be selectively connected to EV interface 40 by switch. In the example illustrated, EV power rail 44 delivers electrical power (single phase, split-phase, or three-phase) from EV interface 40 to selected load interfaces 50.

Load interfaces 50 comprise electrical plugs (male or female) for releasably and electrically connecting to respective loads. In the example illustrated, load interface 50-1 is an electrical connection with load 70-1 while load interface 50-2 is electrically connected to load 70-2. Such loads may be 120 V loads, 208 V loads, 240 V, 277 V loads, 480 V loads, or other loads. Although breaker box 24 is illustrated as comprising two loads 70 associated with two breakers 54 and two switches 58, in other implementations, breaker box 24 may comprise additional load interfaces associated with additional corresponding breakers 54 and switches 58.

Breakers 54, also referred to as a circuit breakers, comprise electrical safety devices designed to protect an electrical circuit from damage caused by overcurrent or overload or a short circuit. Breakers 54 interrupt current flow after protective relays detect a fault. Such circuit breakers may be reset, (manually or automatically) to resume normal operation. Examples of breakers include, are not limited to, standard breakers including single pole, double pole, and triple pole circuit breakers, ground fault circuit interrupter circuit breakers or arc fault circuit interrupter circuit breakers. Each of breakers 54 has a terminal 72 in direct electrical connection to the grid power rail 36 and a second terminal 74 for selectively electrical connection to a load interface.

Switches 58 selectively connect load interface 50 to either a terminal 74 of an associated breaker 54 or the EV power rail 44. In the example illustrated, switch 58-1 is actuatable between a first position (shown in solid lines) in which load interface 50-1 is electrically connected to EV power rail 44 and a second position (shown in broken lines) in which load interface 50-1 is electrically connected to grid power rail 36 via breaker 54-1. Switch 58-2 is actuatable between a first position (shown in broken lines) in which load interface 50-2 is electrically connected to EV power rail 44 and a second position (shown in solid lines) which load interface 50-2 is electrically connected to grid power rail 36 via breaker 54-2.

Controller 30 controls the distribution of electrical power by breaker box 24. In some implementations, controller 30 is incorporated as part of breaker box 24. In some implementations, controller 30 may be a remote controller communicating with breaker box 24. Controller 30 comprises processor 80 and memory 82. Processor 80 comprises a processing unit or processing resource. Memory 82 comprises a non-transitory computer-readable medium containing instructions configured to direct processor 80 to carry out various actions such as obtaining data; analysis and/or the output of control signals. The instructions in memory 82 direct processor 80 to output control signals to control or adjust the positioning of switches 58 and the state of breaker box 24 and system 20. Controller 30 may output such control signals based upon inputs received from a person or manager, instructions received from an additional controller, signals received from controller 66 of the electrical vehicle 60, signals received indicating a status of the electrical power grid or power received at grid interface 32, signals received indicating the state or power demands of various loads currently connected to breaker box 24 and/or various other factors such as time of day (peak or off-peak times for power consumption), scheduled electrical power consumption, essentiality of various loads connected to breaker box 24, priority amongst various loads connected to breaker box 24, an electrical charge state of battery 62 and/or electrical faults or diagnosed issues with respect to electrical vehicle 60, any of the loads 70 or breaker box 24.

In the example illustrated, system 20 is illustrated in a state where controller 30 has actuated switch 58-1 to a position so as to electrically connect load interface 50-1 to EV power rail 44. At the same time, controller 30 has actuated switch 58-2 to a position so as to electrically connect load interface 50-20 to grid power rail 36 via breaker 54-2. As a result, load 70-1 may be electrically powered by electrical vehicle 60, namely battery 62. Load 70-2 may concurrently be electrically powered using electrical power supplied to grid interface 32.

As shown by Figure 1, system 20 enables a consumer to precisely control what loads are receiving power from the electrical power grid and what loads are receiving power stored on the battery of an electrical vehicle to ensure the delivery of power to more essential loads, to manage energy consumption and to save money by reducing use of power from the power grid during peak times.

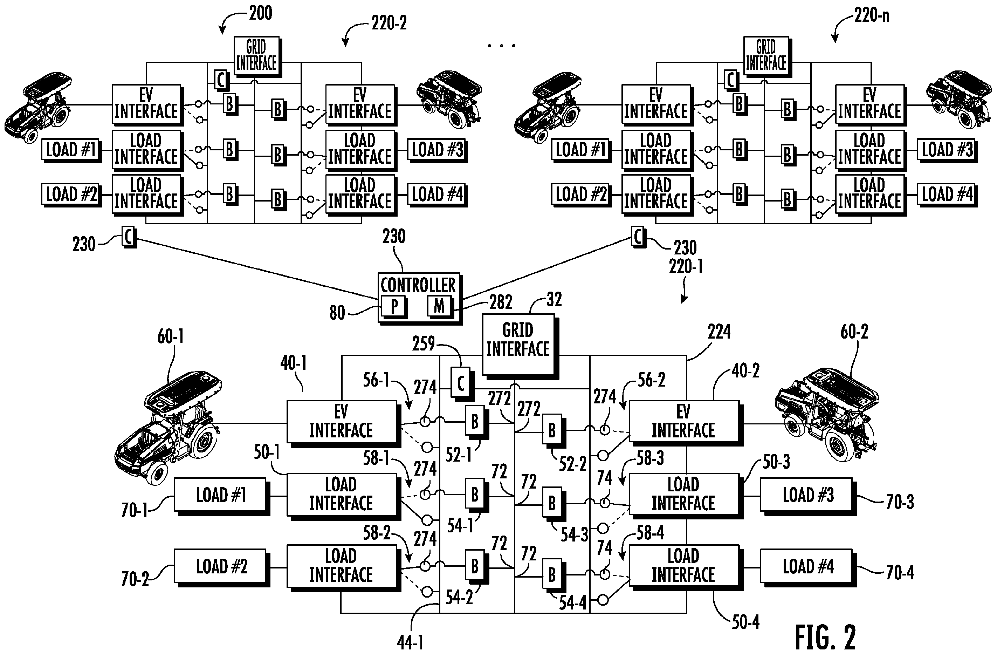

Figure 2 is a diagram of power distribution control system 200 and subsystems 220-1, 220-2 ... 220-n (collectively referred to as systems 220. Systems are each similar to one another. Similar to system 20, each of systems 220 enables a consumer to precisely control what loads are receiving power from the electrical power grid and what loads are receiving power stored on the battery of an electrical vehicle to ensure the delivery of power to more essential loads, to manage energy consumption and to save money by reducing use of power from the power grid during peak times. With the larger overall system 200, systems 220 additionally communicate with one another via their respective controllers (in a wired or wireless fashion) to coordinate the selective connection of various loads to either electrical vehicles or the power grid for enhanced power distribution management.

For sake of brevity, the description of system 220-1 likewise pertains to each of systems 220-2 ... 220-n. System 220-1 comprises breaker box 224, and controller 230. Breaker box 224 is similar to breaker box 24 except that breaker box 224 comprises grid interface 32 and grid power rail 36 (both of which are described above), EV interfaces 40-1, 40-2 (collectively referred to as interfaces 40), EV power rails 44-1, 44-2 (collectively referred to as rails 44), load interfaces 50-1, 50-2, 50-3, 50-4 (collectively referred to as load interfaces 50), breakers 52-1, 52-2 (collectively referred to as breakers 52), 54-1, 54-2, 54-3, 54-4 (collectively referred to as breakers 54), switches 56-1, 56-2 (collectively referred to as switches 56) and switches 58-1, 58-2, 58-3, and 58-4 (collectively referred to as switches 58) and conductor 259.

EV interfaces 40 are each similar to EV interface 40 described above. EV interface 40-1 is configured for releasable electrical connection to an electrical vehicle, such as electrical vehicle 60-1. Likewise, EV interface 40-2 is configured for releasable electrical connection to an electrical vehicle, such as electrical vehicle 60-2. Vehicles 60-1 and 60-2 are each similar to vehicle 60 described above. EV interface 40-1 is configured to be selectively connected to its associated EV power rail 44-1 (sometimes referred to as a first auxiliary EV power rail or bus) while EV interface 40-2 is configured to be selectively connected to its associated EV power rail 44-2 (sometimes referred to as a second auxiliary EV power rail or bus). EV power rails 44-1 and 44-2 are each similar to EV power rail 44 described above.

Load interfaces 50 are each similar to load interfaces 50 described above. In the example illustrated, load interfaces 50-1, 50-2, 50-3 and 50-4 are illustrated as being releasably electrically connected to the schematically illustrated loads 70-1, 70-2, 70-3 and 70-4, respectively. As should be appreciated, when being charged, each of the vehicles 60 may likewise be considered as a load. Such loads may be 120 V loads, 240 V loads or have other load parameters.

Breakers 52 may be similar to breakers 54 except that breakers 52-1, 52-2 each have a first terminal 272 correctly electrically connected to grid power rail 36 and a second terminal 274 for selective electrical connection to EV interfaces 40-1, 40-2 by associated switches 56-1, 56-2, respectively. Breakers 54 are each similar to breakers 54 described above.

Switches 56-1, 56-2 are electrically coupled to their respective EV interfaces 40-1, 40-2. Switch 56-1 is actuatable to a first position (shown in solid lines) in which switch 56-1 electrically connects EV interface 40-1 to grid power rail 36 via breaker 52-1 and a second position (shown in broken lines) in which switch 56-1 electrically connects EV interface 40-1 to EV power rail 44-1. Likewise, switch 56-2 is actuatable to a first position (shown in broken lines) in which switch 56-2 electrically connects EV interface 40-2 to grid power rail 36 via breaker 52-2 and a second position (shown in solid lines) in which switch 56-2 electrically connects EV interface 40-2 to EV power rail 44-2. Switches 56 are similar to switches 58 of system 20.

Conductor 259 comprises an electrical switching component that is actuatable between an open state and a closed state, either manually or by an electric solenoid in response to signals from controller 230. Conductor 259 electrically connects and disconnects EV power rail 44-1 and EV power rail 44-2.

Controller 230 is similar to controller 30 described above except that controller 230 comprises memory 282. Memory 282 comprises a non-transitory computer-readable medium containing instructions for directing processor 80 to selectively and controllably actuate switches 56, switches 58 and conductor 259 based upon inputs received from a person or manager, instructions received from an additional controller, signals received from controller 66 of the electrical vehicle 60, signals received indicating a status of the electrical power grid or power received at grid interface 32, signals received indicating the state or power demands of various loads currently connected to breaker box 224 and/or various other factors such as time of day (peak or off-peak times for power consumption), scheduled electrical power consumption, essentiality of various loads connected to breaker box2 24, priority amongst various loads connected to breaker box 224, an electrical charge state of battery 62 (shown in Figure 1) and/or electrical faults are diagnosed issues with respect to electrical vehicle(s) 60, any of the loads 70 or breaker box 224.

Controller 230 may help control signals actuating switches 56 (via relays) to control the positioning of switches 56. Controller 230 may help control signals such that a particular one of EV interfaces 40 is connected to grid power rail 36 and associated breaker 52 while another of EV interfaces 40 is connected to one or both of the power rails 44. As result, in some circumstances, one of electrical vehicles 60 may be electrically charged from power received through grid interface 32 while the other of vehicles 60 may be supplying electrical to one or more of the individually load interfaces (depending upon the positioning of their respective switches 58).

Controller 230 may actuate control signals to control the position or state of conductor 259 to electrically connect or disconnect EV power rails 44 so as to control which electrical vehicle 60 is powering particular loads connected to respective load interfaces. In some circumstances, one or both of EV vehicles 60 may be electrically connected to grid power rail 36 and inverter 64 may be actuated such that one or both of vehicles 60 is supplying electrical power to the grid across grid interface 32. In some circumstances, one or both electrical vehicles 60 may be electrically connected to grid power rail 36 for the electrical charging of the respective battery 62 while one or more of the load interfaces 50 are selectively connected to grid power rail 36 for the selective powering of their respective loads 70.

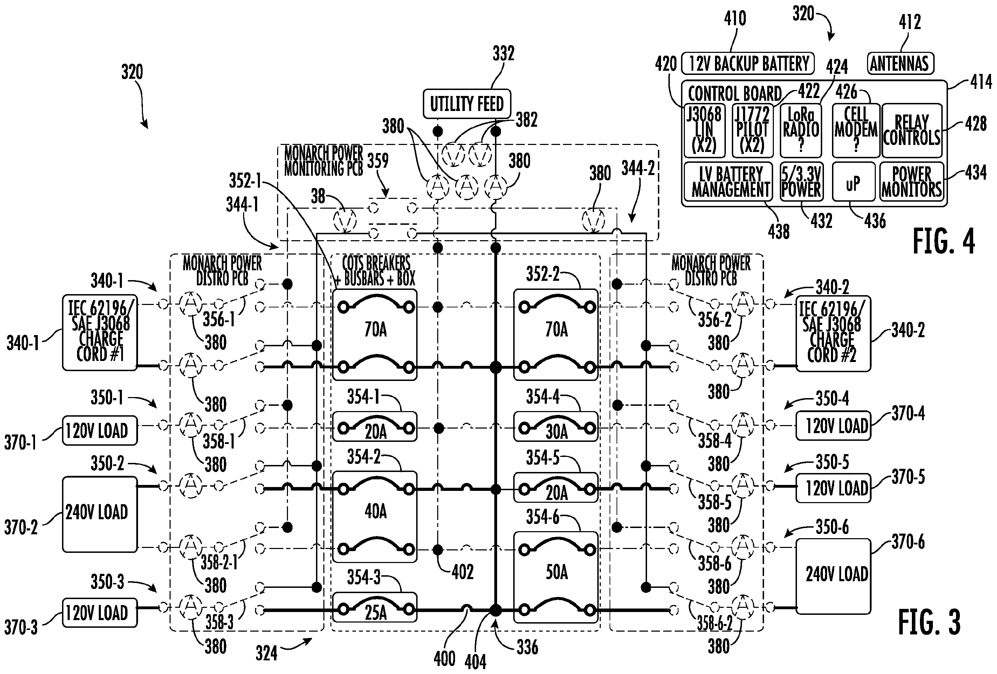

Figure 3 is a diagram schematically illustrating portions of an example power distribution control system 320. Figure 4 is a functional diagram of an example auxiliary and control components of the power distribution control system 320. System 320 is configured for operation as a three-phase power distribution system. System 320 comprises grid interface 332, a grid power rail 336 comprising a neutral line 402 "hot" lines, a top tap or phase line 402 and a bottom tap or anti-phase line 404, EV interfaces 340-1, 340-2, EV power rails 344-1, 344-2 load interfaces 350-1, 350-2, 350-3, 350-4, 350-5 and 350-6, breakers 352-1 , 352-2, breakers 354-1, 354-2, 354-3, 354-4, 354-5, 354-6, switches 356-1, 356-2, switches 358-1, 358-2-1, 358-2-2, 358-3, 358-4, 358-5, 358-6-1 and 358-6-2, conductor 359, current sensors 380 and voltage sensors 382. As schematically shown by Figure 4, system 320 additionally comprises a 12 volt battery backup 410, antennas 412 and a control board 414. Control board 414 supports J 3068 LIN 420, J1772 pilot 422, a LoRa radio 424, a call modem 426, a relay controls 428, a Low Voltage (LV) battery management module 430, a 5/3.3 volt power module 432, power monitors 434 and a processor/microprocessor 436 which may serve as a controller for system 320, similar to controller 230.

The architecture of system 320 enables a controller (microprocessor 436) to selectively and controllably actuate switches 356, switches 358 and conductor 359 based upon inputs received from a person or manager, instructions received from an additional controller, signals received from controller 66 of the electrical vehicle 60, signals received indicating a status of the electrical power grid or power received at grid interface 332, signals received indicating the state or power demands of various loads currently connected to breaker box 324 and/or various other factors such as time of day (peak or off-peak times for power consumption), scheduled electrical power consumption, essentiality of various loads connected to breaker box 324, priority amongst various loads connected to breaker box 324, an electrical charge state of battery 62 (shown in Figure 1) and/or electrical faults or diagnosed issues with respect to electrical vehicle(s) 60, any of the loads 370 or breaker box 324.

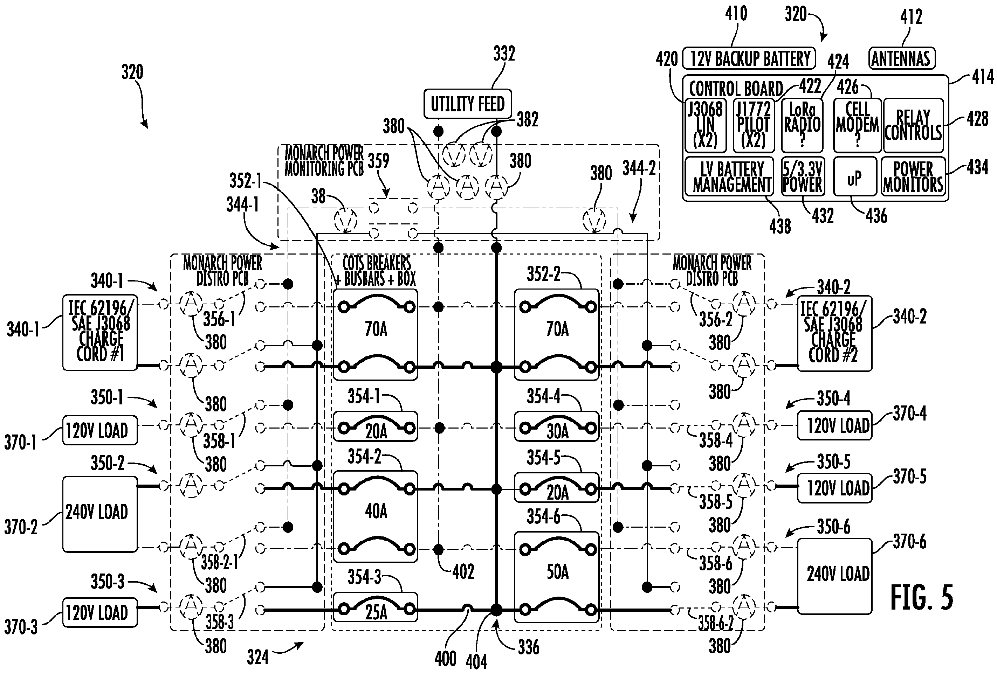

Figures 5-13 illustrate the actuation of switches 356, 358 and conductor 359 to various positions by controller 436 to actuate system 320 between various system states. The state of the electrical switches 356 and 358 are shown in darker, thicker connection lines. Figure 5 illustrates system 320 in a state in which electrical power from the grid is being directed or supplied to each of loads 370-4, 370 have 5 and 370-6 (collectively referred to as load 2) and in which electrical power from vehicle 60-1 is being directed or supplied to each of loads 370-1, 370-2 and 370-3 (collectively referred to as load 1).

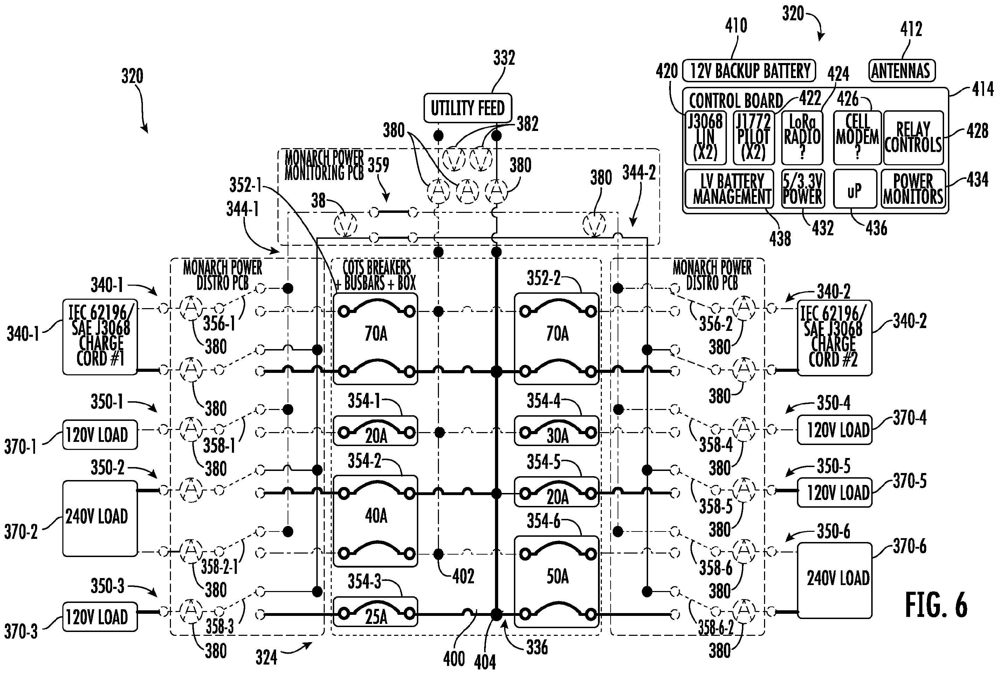

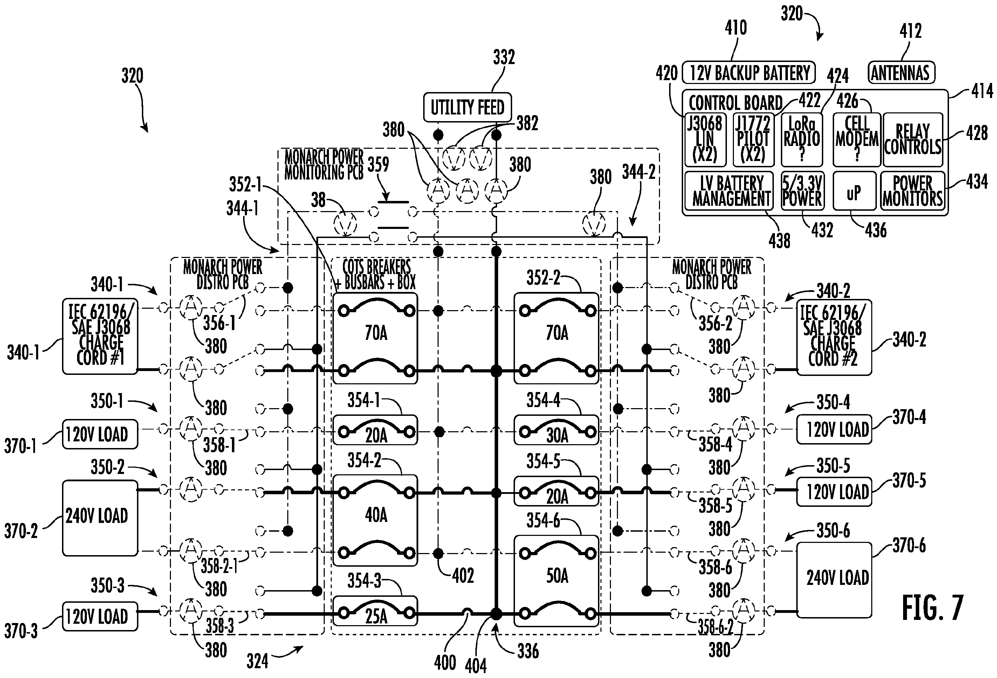

Figure 6 illustrates system 320 in a state in which electrical power from vehicle 60-1 is directed or supplied to each of loads 370 (loads 1 and 2). In the illustrated example, vehicle 60-2 is disconnected from the remainder of system 320 or the relay is in an off state. Figure 7 illustrates system 320 in a state in which each of loads 70 (loads 1 and 2) are powered by the grid (power received through and from the grid interface 332).

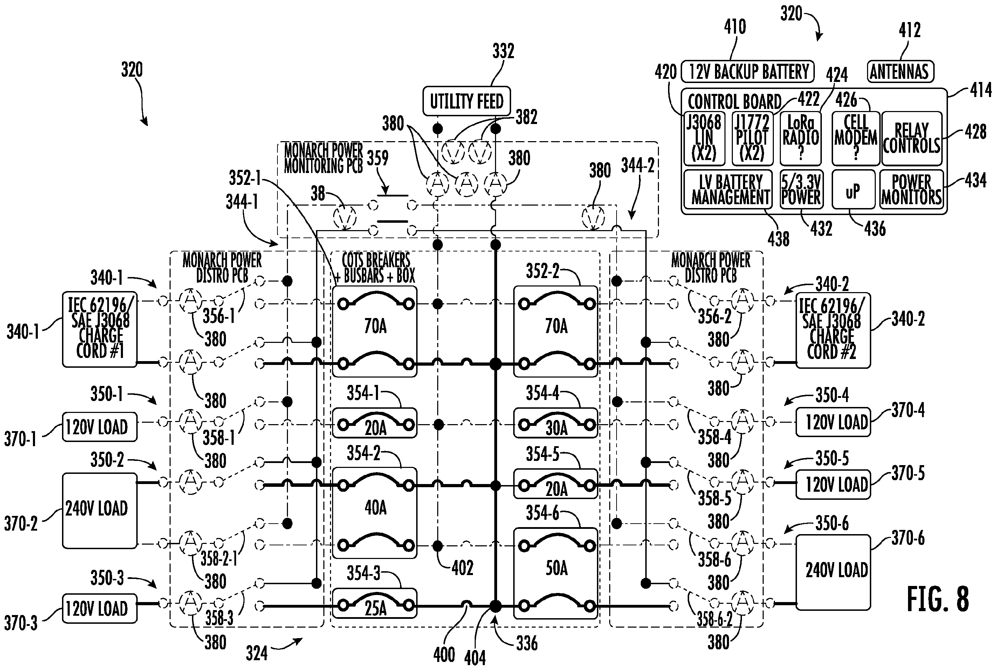

Figure 8 illustrates system 320 in a state in which electrical power from vehicle 60-1 is directed or supplied to loads 370-1, 370-2 and 370-3 (load 1) while electrical power from vehicle 60-2 is directed or supplied to loads 370-4, 370-5 and 370-6 (load 2). As should be appreciated, with the states shown in Figure 5-8, individual loads may be selectively disconnected from the illustrated source of electrical power. For example, in Figure 8, one or more of loads 370-4, 370-5 and/or 370-6 may alternatively be disconnected from vehicle 60-2 while the remaining loads of load 2 remain connected to vehicle 60-2. Likewise, one or more of loads 370-1, 370-2 and 370-3 may alternatively be individually disconnected from vehicle 60-1 while the remaining loads of load 1 remain connected to vehicle 60-1.

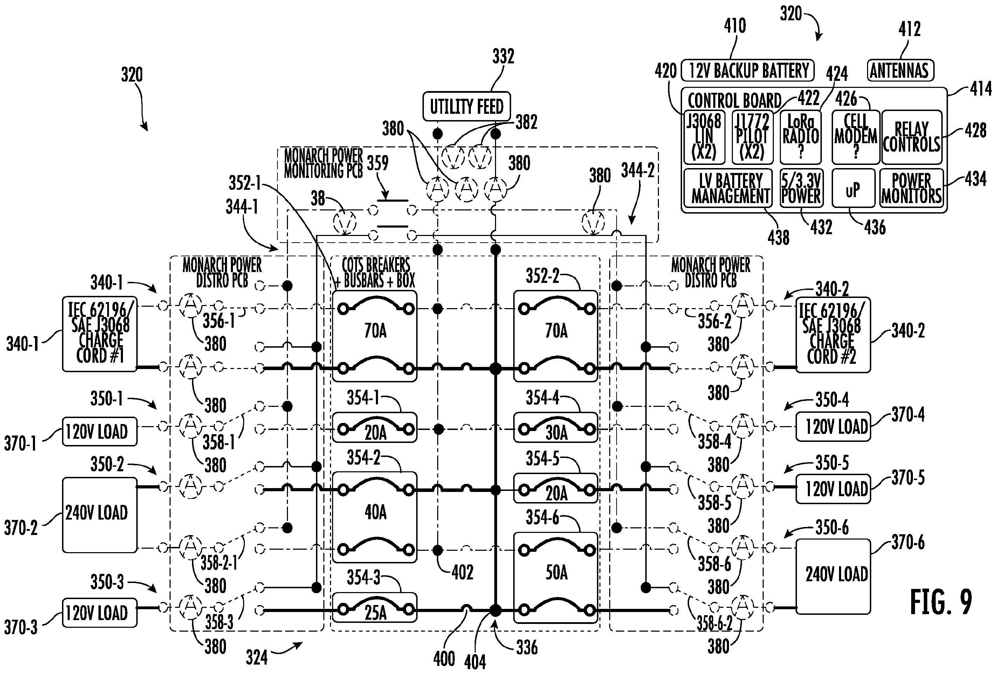

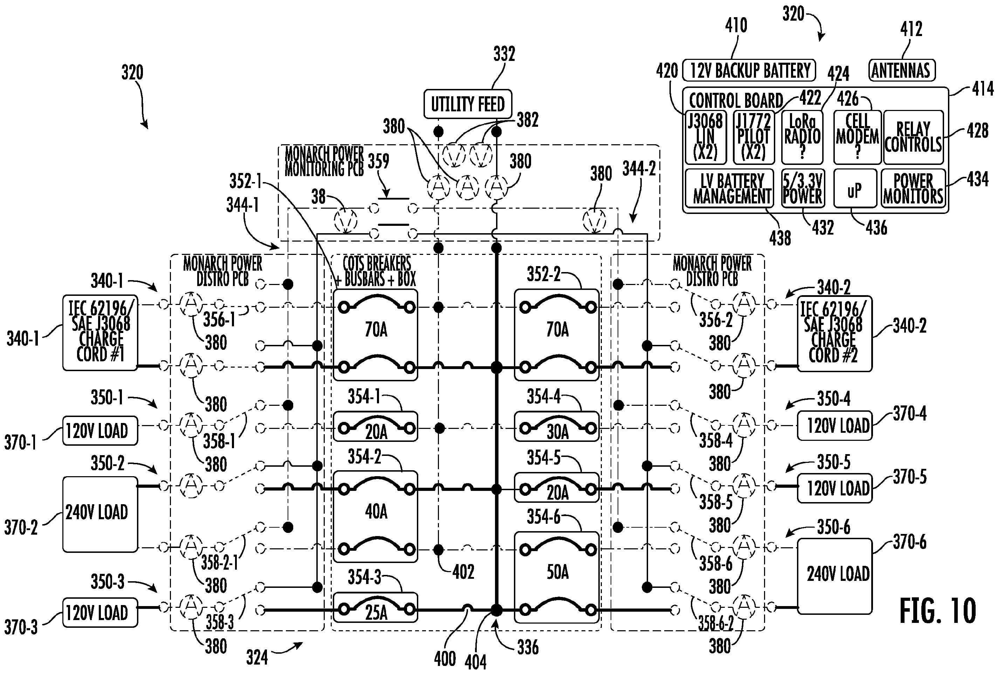

Figure 9 illustrates an example in which system 320 is in a state where both of vehicles 60-1 and 60-2 are concurrently supplied with electrical power from the grid (through grid interface 332). Figure 10 illustrates an example in which electrical power from vehicle 60-1 is directed to supplied back to the grid (through grid interface 332). As should be appreciated, the states of switches 56-1 and 56-2 in Figure 10 may be reversed so as to alternatively supply electrical power from vehicle 60-2 (rather than vehicle 60-1) to the grid.

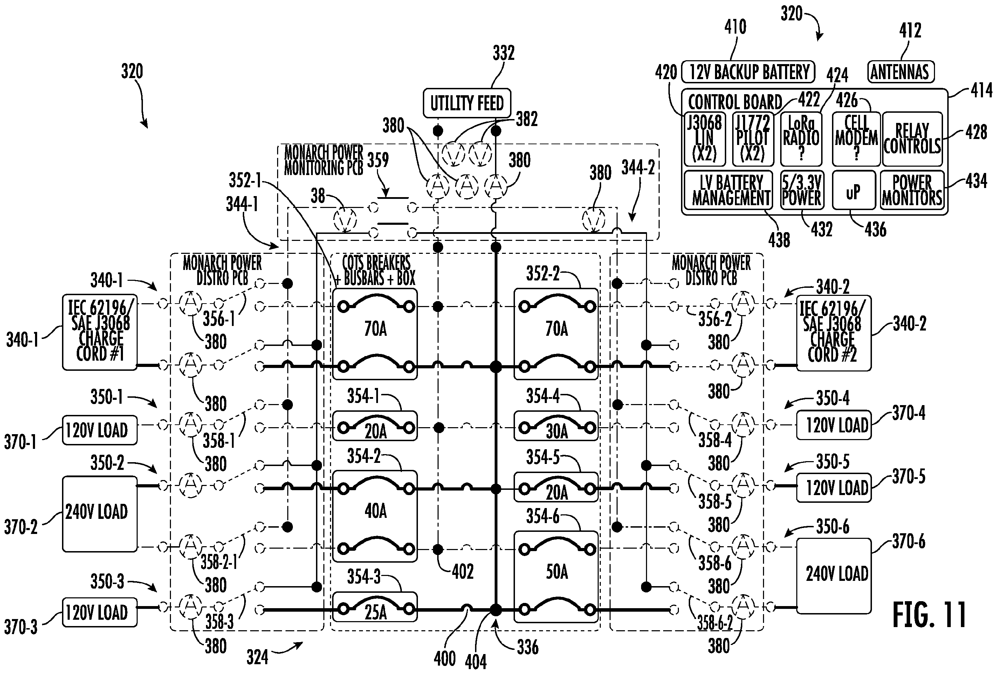

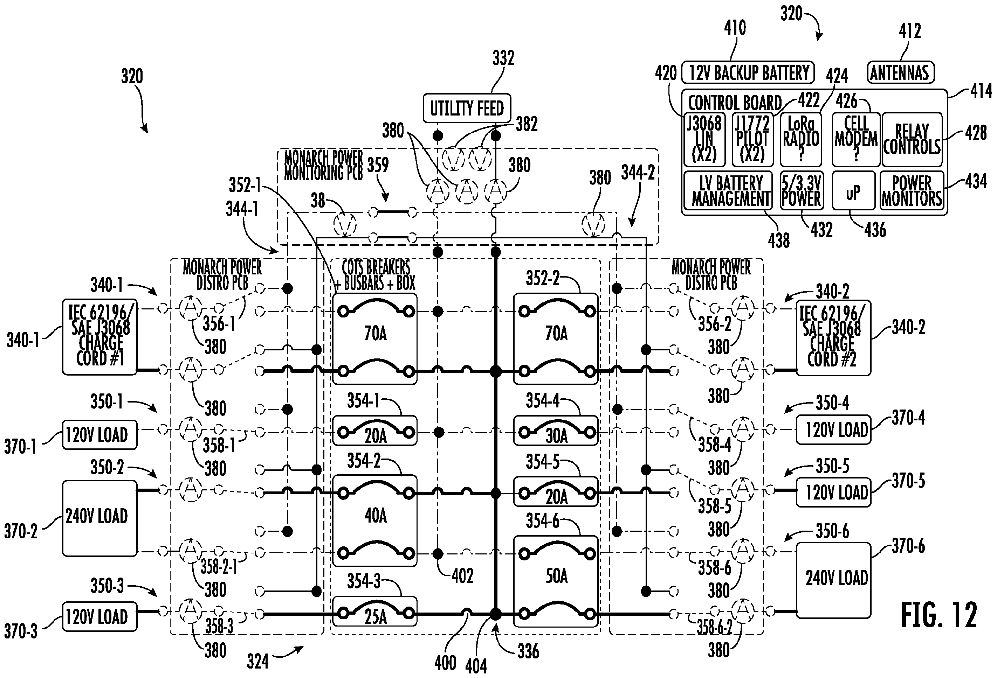

Figure 11 illustrates an example in which system 320 is in a state where vehicle 60-1 is supplying electrical power to each of loads 370-1, 370-2 and 370-3 while vehicle 60-2 is receiving electrical power from or is being charged by the grid (through interface 332). Figure 12 illustrates an example in which system 320 is in a state where vehicle 60-1 is powering loads 370-1, 370-2, and 370-3 (load 1) or where vehicle 60-2 is powering loads 370-4, 370-5 and 370-6 (load 2). Vehicles 60-1 and 60-2 may power their respective loads (load 1 and load 2), but not simultaneously. As noted above, in each of the examples where a vehicle is illustrated as powering all three of its respective loads (vehicle 60-1 and loads 370-1, 370-2 and 370-3; vehicle 60-1 and loads 370-4, 370-5 and 370-6), particular switches may be actuated such that the vehicles 60-1 and 60-2 supply electrical power to less than all of the individual respective loads.

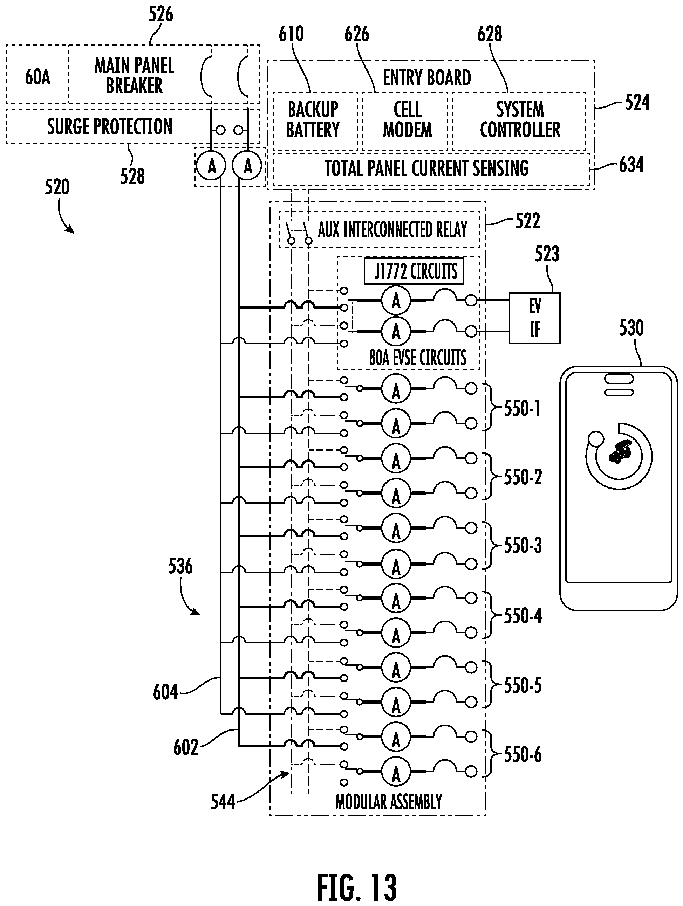

Figure 13 illustrate portions of example power distribution control system 520. System 520 is similar to system 320 except system 520 is configured to supply power to a greater number of electrical loads. System 520 comprises circuit board 522, EV interface 523, entry board 524, main panel breaker 526, surge projection 528 and remote monitor and control device 530. System 520 is configured for operation as a split phase power distribution system (standard for houses). System 520 further comprises grid interface 532 in the form of main panel breaker 526, a grid power rail 536 (also referred to as grid-tied or main busbars) comprising a top tap or phase line 602 and a bottom tap or anti-phase line 604.

Circuit board 522 comprises EV power rail 544, load interfaces 550-1, 550-2, 550-3, 550-4, 550-5 and 550-6 (collectively referred to as load interfaces 550), breakers 552, switches 558, and current sensors 580. EV power rail 544 is similar to each of EV power rails 344 described above. EV power rail 544 comprises a set of auxiliary busbars which are independent of the grid but excessive for any load connected into the panel via load interfaces 550. As a result, system 525 selective support for a portion loads with a non-grid synchronize input such as a standalone inverter or a backup generator.

Load interfaces 550 breakers 552, switches 558 and current sensors 580 are similar to breakers 352, switches 358 and current sensors 380, respectively, described above. Although breakers 352 are illustrated as being positioned between load interfaces 550 and current sensors 580, the relative position of breakers 552 may vary. For example, system 520 may be software configured to support single pole, double pole or triple pole (for three-phase systems) breakers. A breaker may be installed in any slot. In the example illustrated, the only fixed breakers are those for the EV interface 523.

EV interface 523 is similar to EV interfaces 40 or 340 described above. EV interface 523 comprises an electrical component configured for releasably connecting to an electrical vehicle so as to receive electrical power from the electrical vehicle. In some implementations, EV interface 523 may comprise a SAE J3068 electric vehicle power transfer system using a three-phase capable coupler. In some implementations, EV interface 40 may comprise a SAE J1772 coupler for supporting a wide range of single phase AC charging rates. In the example illustrated, EV interface 523 comprises a such as an IEC 62196 or SAE J3068 set.

Figure 13 schematically illustrates entry board 524. Entry board 524 include the same components as described above with respect to system 320 for actuating or controlling system 320. Entry board 524 comprises a 12 volt battery backup 610, antennas 412, a J3068 LIN 420, J1772 pilot 422, a LoRa radio 424, a call modem 626, a relay controls 428, and a LV battery management module 430, a 5/3.3 volt power module 432, power monitors 434 and a systems 28 comprising processor/microprocessor 436 (shown Figure 3) which may serve as a controller for system 520, similar to controller 230. Antennas 412, the J3068 LIN 420, the J1772 pilot 422, the low Ray radio 424, the relay controls 428, the LV battery management module 430, the 5/3.3 volt power module 432, and the power monitors 434 are each shown in Figure 3. In some implementations, a LoRa radio 424 is omitted.

Main panel breaker 526 serves as a grid interface or utility feed for system 520. Surge protection 528 comprise a surge protector that suppresses excess voltage to prevent it from causing harm. In some implementations, surge protection 528 also mitigates excess voltage relative to the system ground wire. In the example illustrated, surge protection 528 further comprises sensors for monitoring the operability of the surge protector. Such sensors output signals which are transmitted to system controller 628 for communication with remote monitor and control device 530.

Remote monitor and control device 530 facilitates remote monitoring and/or control system 520. Device 530 may be in wireless communication with system controllers 628, such as with the cell modem 626. Device 530 may have a screen for presenting information to a person remote from entry board 524 and circuit board 522. The screen or an associated touchpad, keyboard, keypad or the like may also be used to receive instructions or commands from the remote individual. In some implementations, device 530 may comprise a portable device such as a tablet computer, laptop, smart phone or dedicated portable electronic device. In the example illustrated, device 530 is illustrated as a smart phone which wirelessly communicates with entry board 524 and system controllers 628.

In the example illustrated, device 530 receives signals from entry board 524 and presents information indicating current ongoing charging of any loads connected to load interfaces 550, current ongoing transmission of electrical current from the grid, current ongoing transmission electrical current to or from an electrical vehicle via EV interface 523, the current state of charge of an electrical vehicle connected to system 520 via EV interface 523, and the operability of surge protection 528. In some implementations, device 530 may comprise software or hardware that additionally communicates with other remote servers or data sources.

For example, device 530 may additionally present information regarding the current cost price per unit cost of electrical power (which may vary based upon amounts, time of day or the like) from the grid. In such implementations, device 530 may calculate and present additional information to the remote person to facilitate enhanced decision-making. For example, based upon the current cost of electrical power from the grid, device 530 may present information indicating the current electrical power consumption cost (electrical units (kilowatts) currently being received or consumed multiplied by the price per unit cost) of electrical power for all of the loads and size or for each of the individual loads. In circumstances where electrical vehicles themselves are also being charged, the consumption cost and/or the rate at which the consumption cost is changing may also be presented by device 530 to the remote individual.

In some implementations, device 530 may prompt or may be configured to receive inputs from the remote person altering the operational state of system 520. For example, the remote individual operator may be given the opportunity to provide input to selectively connect or disconnect any of the various loads connected to load interfaces 550. The operator may be provided with the opportunity to control the direction of current flow with respect to an electrical vehicle connected via interface 523. The remote individual may choose to charge the electrical vehicle or may choose to provide charge to particular selected loads connected to interfaces 550 or to supply electrical charge back to the grid. As described above with respect to Figures 5-12, device 530 may receive input selectively actuating individual switches to actuate system 520 between various states to control whether electrical current is being supplied to the grid or being received from the grid and/or what particular loads are receiving electrical power from what particular sources (the grid or the electrical vehicle).

In addition, device 530 may be used to schedule future particular chosen states for system 520. For example, depending on the particular time of day, the difference in electrical pricing for particular time of day or week, or the importance of reliable powering of a particular load, switches 558 may be selectively actuated to differently supply electrical power from different sources from the grid or an electrical vehicle) at particular times of day or particular days of the week. Likewise, such switches may be selectively actuated to cause electrical vehicle to supply electrical power at particular times of the day or particular times a week or to be charged at other particular times a week. In some implementations, device 530 may be configured to receive other criteria thresholds for controlling when system 520 is in a particular state, for controlling the actuation of switches 558. For example, in addition to being based upon the time of day or times a week, the timing of the different states or the timing of switch actuations automatically by controller 628 may also be alternatively or additionally based upon electrical power unit pricing criteria, current ongoing electrical power consumption by individual loads or groups of loads, currently sensed or determined stored charge levels (the current charge level of the battery of the electrical vehicle or a load), and/or the current rate at which electrical current may be supplied to system 520 from a charging source connected to one of interface 550 (such as the rate at which electrical charge is received from a solar panel).

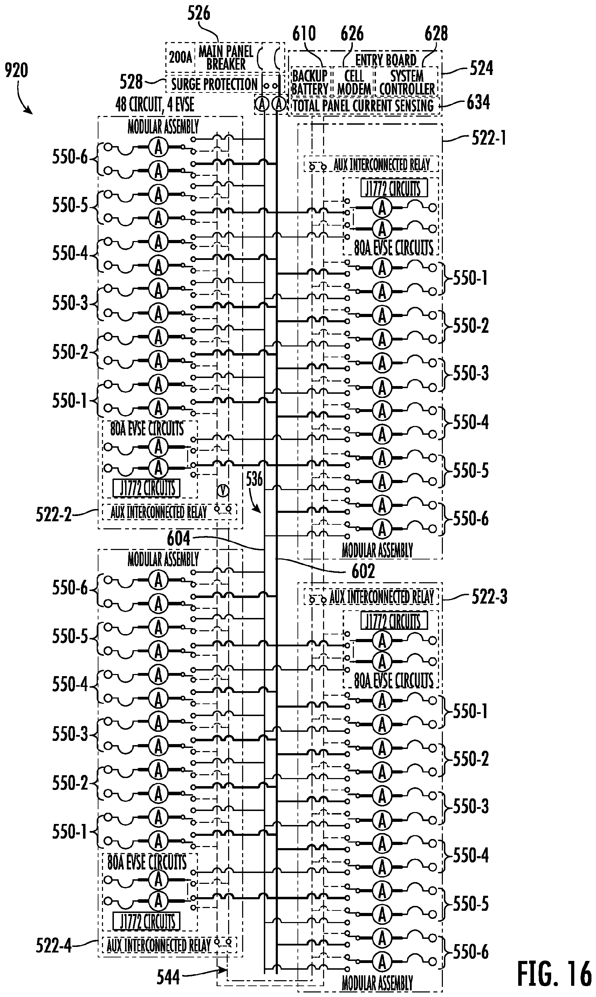

System 520 may be modular in design. As shown by Figures 13-16, system 520 facilitates up to four configurations suitable ranging from a small home with a 60 amp service (Figure 13) to a small apartment building with the 200 amp service (Figure 16) and up to four electrical vehicles. The modular nature facilitates higher production volumes of fewer discrete parts, reducing costs while increasing quality. Part of the modular concept design facilitates reuse of the same circuit boards 522 with a change of busbars that connect them to supports split-phase and three-phase configurations with the same components.

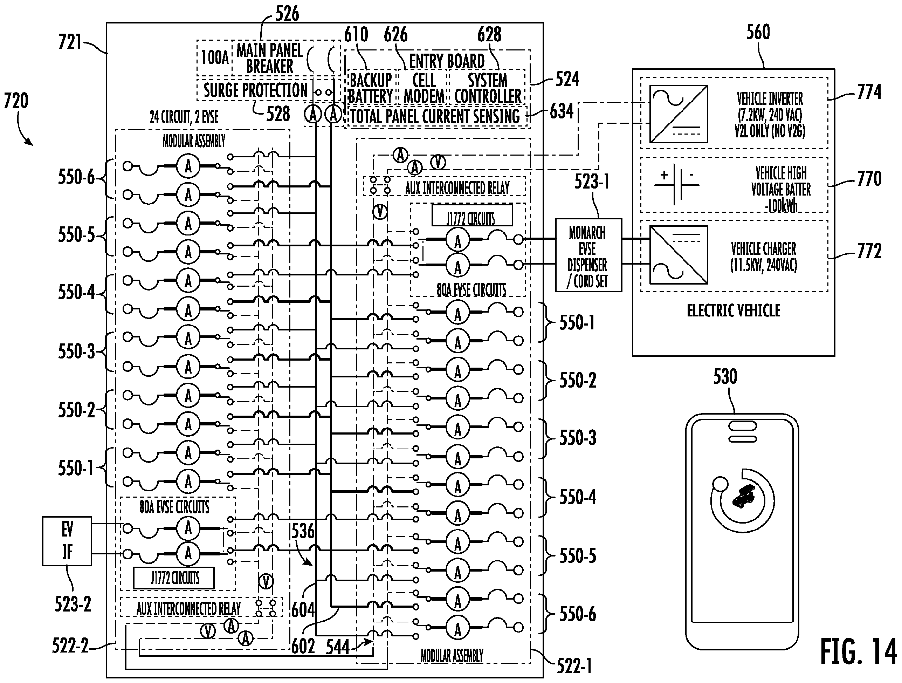

Figure 14 illustrates a particular example power control system 720 configured for 100 amp service 24 load interfaces and up to two electrical vehicles. System 720 comprises two circuit boards 522-1 and 522-2. Figure 14 illustrates an electrical vehicle 560 connected to system 720. In particular, electrical vehicle 560 is connected to EV interface 523 which is connected to circuit board 522-1.

The electrical vehicle 560, schematically illustrated, comprises a battery 770, a charger 772 and a vehicle inverter 774. In the example illustrated, the battery comprises a high voltage battery. Charger comprises 11.5 kW 240 volts alternating current (VAC) charger. Inverter comprises a 7.2 kW 240 VAC (V2L only (NO V2G)) inverter. In other implementations, battery, charger and/or inverter may comprise other particular components. Although illustrated connections for purposes of illustration, in the particular example illustrated, electrical connection to the charger inverter is via a single charging cord set connection. In such an implementation, electrical vehicle may supply power to the auxiliary busbar or EV power rail 544 using a back-feeding power on the single charging cord set connection.

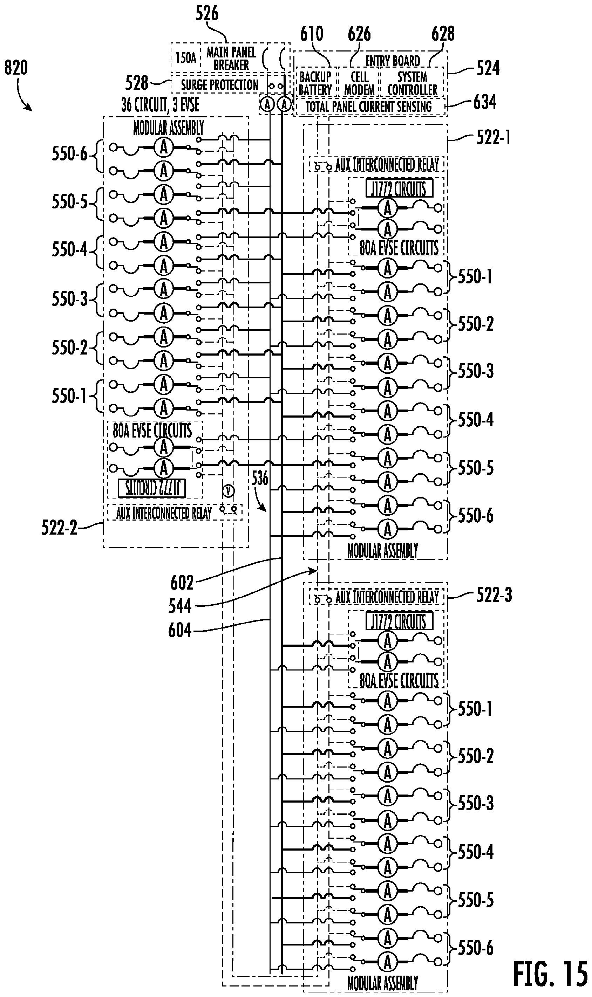

Figure 15 illustrates power distribution control system 820 for use with a 150 amp service, wherein system 820 provides 36 load interfaces (for connection to loads or charge supplying sources such as solar panels) and connection to up to three electrical vehicles. Figure 16 illustrates power distribution control system 920 for use with a 200 amp service, wherein system 920 provides 48 load interfaces and connection up to four electrical vehicles. In other implementations, additional circuit boards 522 may be provided for an even larger number of load interfaces and for connection to an even larger potential number of electrical vehicles (powered tractors, trucks, passenger cars or the like). As should be appreciated, systems 820 and 920 may additionally comprise additional electrical vehicle interfaces 523 and devices 530.

Example PCD systems 520, 720, 820 and 920 tightly integrate conventional electric loads with an EVSE connection. This enables management of total panel power draw during vehicle charging, often eliminating the need for expensive upgrades for the electrical distribution upstream of the main panel (e.g. meter, utility interconnect, etc.). This tight EVSE integration also reduces overall system costs and sets up PCD systems to support future vehicles with AC export power capabilities via the charging cable (such as the 2025 MONARCH ^{™} MK-V ^{™} electric tractor).

The example power distribution control (PDC) systems 520, 620, 720, 820 and 920 provide enhanced electrical power distribution control integration. The example PCD systems integrate many different functions into a single panel or box, such as a panel or box 721 shown in Figure 14. An existing system with equivalent functionality would theoretically require an intelligent breaker panel, an automated transfer switch, an external whole panel surge protector, a backup battery, and a wall-mounted inverter and require installation, conduit runs, and wiring between these separate boxes. Consider the example of a homeowner attempting to integrate their electric pickup truck to back up their home (served by a 100A feed and panel). In contrast, example PDC system 720 (as well as systems 520, 620, 820 and 920) only requires three components to achieve this goal: the main panel, such as a main panel 721 shown in Figure 14, a low cost EVSE dispenser / cord set, such as the cord set 523 shown in Figure 14, and a cord with a 240/120V AC plug). The example PDC system auxiliary busbar architecture enables simultaneous connection of the charge cord (connected to the grid) and the stand-alone split phase outlet (not grid tie capable) into the panel box. In this configuration, if the grid goes down, the PCD system automatically switches critical loads over to the vehicle powered aux rail in under half a second. Users select load prioritization and monitor power consumption per load applications provided on the device 530. Since the PCD system fully replaces an existing panel every load in the home can potentially be backed up (subject to power limitations on the backup inverter/generator).

Beyond just backup, the PCD system 720 also intelligently limits full panel current to 100A via high-speed adjustment of the J1772 charging interface current limiting Control Pilot Pulse Width Modulated (PWM) signal. The onboard charger of the electric vehicle may pull up to 48A, or roughly half the full panel capacity for a 100A service. The PCD system 720 eliminates the need to upgrade the service entrance wiring, meter, and utility interconnect.

By comparison, attempting to implement this same configuration into a person's home with a currently available or conventional smart subpanel would likely require 4 components: a smart subpanel, an external whole panel surge suppressor, a commercial off the shelf (COTS) EVSE / wall charger, and an upgrade to the homes meter and grid interconnect wiring. Such wiring would likely require four conduit runs (two between the main panel and the smart subpanel). Although the smart subpanel might support a similar configuration where the electric vehicle's stand-alone generator-equivalent output could be plugged into the generator input on the smart subpanel, this generator input has a manual transfer switch interlock, requiring the user to open the panel, turn off the grid connection, and turn on the generator connection when a blackout occurs. While the circuits in the subpanel can be individually controlled and monitored, the user must decide which 12 circuits to back up at the time of installation. While numerous COTS EVSE options are available, they are not designed to interact with the smart subpanel. Therefore, it's not capable of limiting charging current going to the electric vehicle. Hence, the integration of the electric vehicle into this user's home will most likely require upgrading the incoming service to the building from 100A to 150A. At the end of a blackout, the user will need to manually transfer power to the subpanel back to the grid.

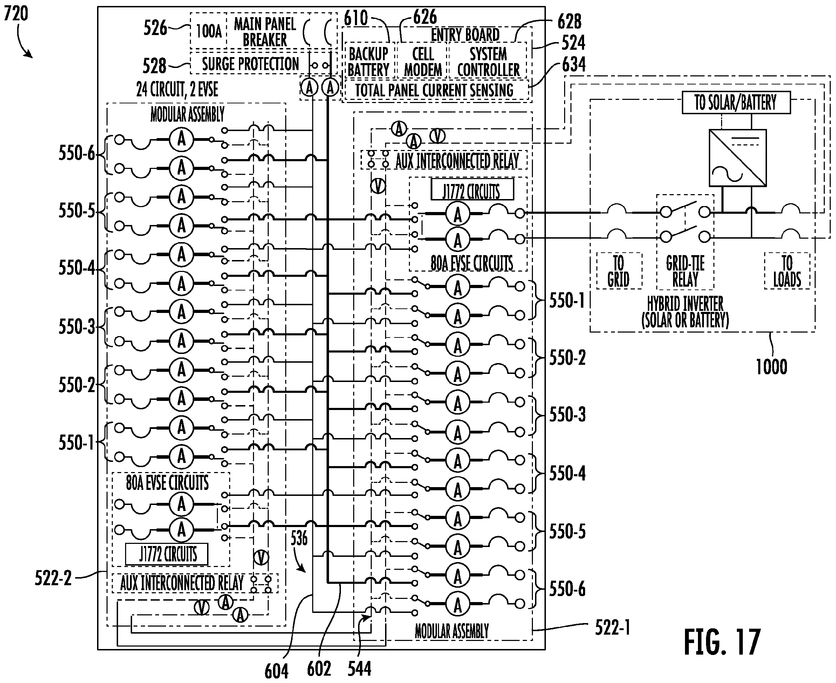

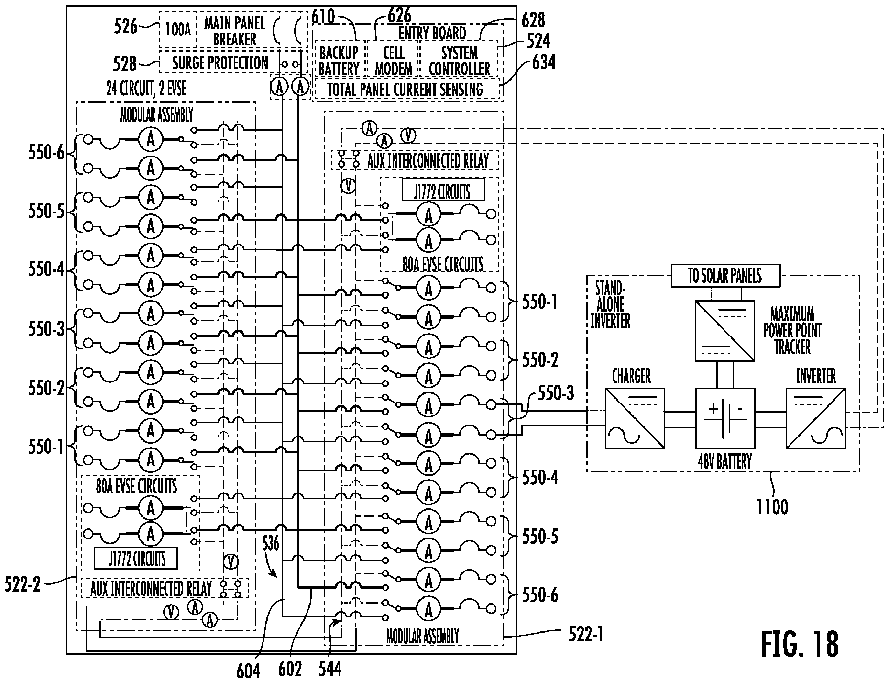

Beyond EV integration, the example PCD systems also enable faster and lower cost integration of dwelling installed solar and other inverters. Inverters that support both grid-tied and stand-alone operations, often referred to as hybrid inverters, (see inverter 1000 shown in Figure 17) are designed to support critical loads in a blackout. Connecting the critical load port of this class of inverter into the aux rail of a MELD panel enables whole home backup without compromises (see Figure 18). Users can select which loads are normally powered via the aux rail and inverter critical load ports. This limits load power disruption at the start of a blackout to the changeover / anti-islanding speed of the inverter. Inverters with a 40A (9.6kW) or lower rating can be connected to any MELD circuit. Inverters with outputs between 40A and 80A (19.2kW) can utilize the EVSE port as a conventional breaker protected output from the PCD system panel. This approach to integrating this type of inverter is not easily achieved with existing smart panels. Hence, the example PCD systems increase the number of inverter options (including many lower cost options) available to users.

The example PCD systems 520, 720, 820, 920 additionally support stand-alone only inverters. This type of inverter, such as inverter 1100 shown in Figure 18, is popular among people trying to go partially off grid or operating within budgets that don't allow for grid-tie inverters, cannot synchronize with or feed power back to the grid. However, the auxiliary rail architecture of the PCD systems enables utilization of class of inverter 1100 for automatic whole home backup.

Existing stand-alone only inverter installations either utilize a critical loads subpanel or connect to a main panel like a backup generator. A mechanical interlock between the main breaker and the stand-alone inverter 1100 output forces the user to choose either grid or backup power for the whole panel. This configuration prevents a dangerous interconnect of the stand-alone inverter to the grid, but is inconvenient, non-automatic, and often results in users toggling breakers in the main panel to limit load to inverter output capability.

The example PCD system 720 connected to the same stand-alone inverter 1100 provides a more convenient and safer user experience. It enables automatic transfer from grid to backup, automatic load prioritization and load shedding, and keeps the user from toggling breaker or physically interacting with their electrical distribution system. Stand-alone inverters are some of the lowest cost backup systems available. In some circumstances, the example PCD systems may enable a second life for some stand-alone inverters that would otherwise be scrapped and replaced with newer grid-tie inverters.

The example PCD system architectures enable unique approaches to utility interconnect. First, the flexibility of PCD system enables any inverter or combination of inverters to be utilized as-is (up to 19.2kW per inverter). Second, the example PCD system automatically disconnects an attached inverter that is in danger of back-feeding to the grid without an interconnect agreement in place. Consider a grid-tie solar + battery backup inverter connected to the system and wired as shown in Figure 17 with the load side of the inverter connected to the aux rails 544. The example PCD system 720 continuously monitors the current supplied by the inverter 1000, per-circuit load currents, and the total panel current draw. By default, critical loads would be connected to the aux rail 544 to minimize switch over time in the event of a blackout. As inverter output increases beyond the demand of these critical circuits, non-critical circuits could be automatically switched over from grid to aux, or switched over by an operator in response to warnings or notices presented to the user, in effect keeping the aux rail 44 loaded as close to, but not exceeding, the output power of the inverter 1000. If the inverter output nears or exceed the total panel load draw, PCD system 720 would automatically disconnect the line-side connection to the inverter 1000 to prevent an unapproved back-feed situation. Once inverter output drops or demand increases, the inverter 1000 would be reconnected to the grid. The example PCD systems, such as system 720, would continue to operate in this fashion until an approved interconnection agreement was uploaded to the end-user's web-based control account. At this point, the back end of the control application found on device 530 may connect to and update the specific PCD system 720 unit over the air to enable generation via keeping the inverter 1000 continuously connected to the grid. This approach enables maximum renewable energy capture and reduced power bills for the end-user while the interconnection agreement is being approved.

The example PCD systems, such as PCD system 720, will also be able to intelligently transfer loads behind the meter, allowing for a residence's existing power infrastructure to support additional electrification technologies like heat pumps and fully electric home appliances (ovens, stoves, dryers, etc.). This enables accelerated electrification of residential homes, especially those located within rural communities. By intelligently distributing power to the sources that need it, PCD system 720 ensures that power usage never exceeds panel capacity and allows residents to adopt sustainable technologies without the need for expensive utility upgrades. Integration of an EVSE interface for each PCD system 720 module also helps to future-proof system installations to support continued growth in EV adoption - enabling a clean path from one EV and three ICE vehicles at a small 200A service apartment complex to 4 EVs and no ICE vehicles.

One of the strengths of PCD systems is the ability to utilize EV batteries instead of single-purpose stationary storage battery backups, leveraging investments already being made by residents for their transportation and off-road needs. Many farms may be looking to electrify their equipment from tractors to farm trucks, and beyond because of the low operational costs. These customers are also expected to transition their ICE vehicles even more rapidly when V2X capabilities are widely available. This means that as time goes on, the number of potential battery backup sources near rural residences will steadily increase and could lead to enhanced overall resilience.

Although the present disclosure has been described with reference to example implementations, workers skilled in the art will recognize that changes may be made in form and detail without departing from the scope of the claimed subject matter. For example, although different example implementations may have been described as including features providing benefits, it is contemplated that the described features may be interchanged with one another or alternatively be combined with one another in the described example implementations or in other alternative implementations. Because the technology of the present disclosure is relatively complex, not all changes in the technology are foreseeable. The present disclosure described with reference to the example implementations and set forth in the following claims is manifestly intended to be as broad as possible. For example, unless specifically otherwise noted, the claims reciting a single particular element also encompass a plurality of such particular elements. The terms "first", "second", "third and so on in the claims merely distinguish different elements and, unless otherwise stated, are not to be specifically associated with a particular order or particular numbering of elements in the disclosure.

## Claims

1. A power distribution control system comprising:
a grid interface for connection to a power supply grid;
a grid power rail connected to the grid interface;
an electrical vehicle (EV) interface for connection to an inverter of an electrical vehicle;
an EV power rail connected to the EV interface;
a first load interface for connection to a first external load;
a second load interface for connection to a second external load;
a first switch for selectively connecting the first load interface to one of the grid power rail and the EV power rail, across a first breaker;
a second switch for selectively connecting the second load interface to one of the grid power rail and the EV power rail, across a second breaker; and
a controller configured to output control signals to the first switch and the second switch to actuate the system between:
a first system state in which power on the EV power rail is supplied to the first load interface and power on the grid power rail is concurrently supplied to the second load interface;
a second system state in which power on the EV power rail is concurrently supplied to the first load interface and the second load interface; and
a third system state in which power on the grid power rail is concurrently supplied to the first load interface and the second load interface.

2. The power distribution control system of claim 1 further comprising:
a third load interface for connection to a third external load; and
a third switch for selectively connecting the third load interface to one of the grid power rail and the EV power rail, across a third breaker,
wherein the controller is configured to output control signals to the first switch, the second switch and the third switch to actuate the system between:
a fourth system state in which power on the EV power rail is supplied to the first load interface and the third load interface and power on the grid power rail is concurrently supplied to the second load interface;
a fifth system state in which power on the EV power rail is concurrently supplied to the first load interface, the second load interface and the third load interface;
a sixth system state in which power on the grid power rail is concurrently supplied to the first load interface, the second load interface and the third load interface; and
a seventh system state in which power on the EV power rail is supplied to the first load interface and power on the grid power rail is concurrently supplied to the second load interface and the third load interface.

3. The power distribution control system of claim 1 or claim 2 further comprising:
a second electrical vehicle (EV) interface for connection to an inverter of an electrical vehicle;
second EV power rail connected to the second EV interface;
a conductor for selectively connecting and disconnecting the EV power rail and the second EV power rail;
a third load interface for connection to a third external load;
a fourth load interface for connection to a fourth external load;
a third switch for selectively connecting the third load interface to one of the grid power rail and the EV power rail, across a third breaker;
a fourth switch for selectively connecting the fourth load interface to one of the grid power rail and the second EV power rail, across a fourth breaker,
wherein the controller is configured to output control signals to the first switch, the second switch, the third switch and the fourth switch to actuate the system to a third system state in which power on the second EV power rail is supplied to the first load interface across the EV power rail.

4. The power distribution control system of claim 3 further comprising:
a fifth switch for selectively connecting the EV interface to one of the grid power rail and the EV power rail, across a fifth breaker.

5. The power distribution control system of claim 4 further comprising a current sensor between the EV interface and the third switch.

6. The power distribution control system of claim 4 further comprising:
a second EV power rail;
a sixth breaker having an eleventh terminal connected to the grid power rail and a twelfth terminal;
a sixth switch for selectively connecting the EV interface to one of the twelfth terminal and the EV power rail;
a fifth load interface for connection to a fifth external load; and
a seventh switch for selectively connecting the fifth load interface to one of the grid power rail and the second EV power rail, across a seventh breaker.

7. The power distribution control system of any preceding further comprising a current sensor between the first switch and the EV interface.

8. The power distribution control system of claim 7 further comprising:
a third switch for selectively connecting the EV interface to one of the grid power rail and the EV power rail, across a third breaker.

9. The power distribution control system of claim 8 further comprising a current sensor between the EV interface and the third switch.

10. The power distribution control system of any of claims 5 to 9 further comprising:
a second EV power rail;
a fourth switch for selectively connecting the EV interface to one of the grid power rail and the EV power rail, across a fourth breaker;
a third load interface for connection to a third external load; and
a fifth switch for selectively connecting the third load interface to one of the grid power rail and the second EV power rail, across a fifth breaker.

11. The power distribution control system of any preceding claim further comprising a current sensor electrically connected to the grid power rail to output signals indicating electrical current draw across the grid interface, wherein the controller is configured to output the control signals of the first switch and the second switch to actuate the system between the first system state, the second system state and the third system state based upon the signals indicating the electric current draw across the grid interface.

12. The power distribution control system of any preceding claim further comprising:
a third switch for selectively connecting the EV interface to one of the grid power rail and the EV power rail, across a third breaker.

13. The power distribution control system of claim 12 further comprising a current sensor electrically connected to the grid power rail to output signals indicating electrical current draw across the grid interface, wherein the controller is configured to output the control signals of the first switch, the second switch and the third switch to actuate the system between the first system state, the second system state and the third system state based upon the signals indicating the electric current draw across the grid interface.

14. The power distribution control system of claim 13 further comprising a second current sensor electrically connected between the first load interface and the first switch, wherein the controller is configured to output the control signals of the first switch, the second switch and the third switch to actuate the system between the first system state, the second system state and the third system state based upon the signals indicating the electric current draw across the grid interface and based upon signals from the second current sensor.

15. The power distribution control system of any of claims 12 to 14, wherein the controller is configured to output the control signals of the first switch, the second switch and the third switch to actuate the system between the first system state, the second system state and the third system state based upon a schedule of electrical loading by loads.
